# EUROPÄISCHE PATENTSCHRIFT

(11) **EP 2 002 282 B1**
(45) Veröffentlichungstag und Bekanntmachung des Hinweises auf die Patenterteilung: **18.05.2011**
(21) Anmeldenummer: 07722995.3
(22) Anmeldetag: 02.03.2007
(51) Int. Cl.: G01S 13/08, G01S 13/88, H01Q 21/06, H01Q 21/20

(54) **MIKROWELLEN-POSITIONSMESSVORRICHTUNG UND POSITIONSMESSVERFAHREN**
MICROWAVE POSITION MEASUREMENT APPARATUS AND POSITION MEASUREMENT METHOD
DISPOSITIF DE MESURE DE POSITION À MICRO-ONDES ET PROCÉDÉ DE MESURE DE POSITION

(30) Priorität: 25.03.2006 DE 102006013923
(43) Veröffentlichungstag der Anmeldung: 17.12.2008
(73) Patentinhaber: FESTO AG & Co. KG, 73734 Esslingen (DE)
(72) Erfinder: REININGER, Thomas, 73249 Wernau (DE); VON ZEPPELIN, Matthias, 73669 Lichtenwald (DE); MAIER, Marcus, Dr. Ing., 73760 Ostfildern (DE)
(74) Vertreter: Bregenzer, Michael
(86) Internationale Anmeldenummer: PCT/EP2007/001800
(87) Internationale Veröffentlichungsnummer: WO 2007/110132

(56) Entgegenhaltungen:
- DE-A1- 10 205 904
- DE-A1- 19 833 220
- US-A- 4 641 139
- US-A1- 2004 099 058

## Beschreibung

Die Erfindung betrifft ein Positionsmessverfahren und eine Mikrowellen-Positionsmessvorrichtung zur Positionserfassung eines in einem Bewegungsraum eines Aktor-Gehäuses beweglich angeordneten Aktorglieds eines Aktors, gemäß dem Oberbegriff des Anspruchs 1

Eine solche Mikrowellen-Positionsmessvorrichtung ist beispielsweise aus der DE 102 05 904 A1 oder DE 198 33 220 A1 bekannt. Die Positionsmessvorrichtung gemäß DE 102 05 904 A1 ist beispielsweise in den Deckel eines pneumatischen Zylinders integriert und misst einen Abstand eines Kolbens zu diesem Deckel. Die bekannte Positionsmessvorrichtung misst mit Rundleiterhohlwellen mit dem charakteristischen E-Feldtyp der E01-Welle. Die E01-Welle bildet ein elektrisches Feld aus, das die Innenwandung des Bewegungsraums bzw. des Hohlleiters einbezieht, wobei elektrische Feldlinien beispielsweise in einem Übergangsbereich zwischen der Wandung und dem Hohlleiter-Innenraum senkrecht verlaufen.

Das US-Patent 4,641,139 beschreibt einen Flüssigkeitsmessung in einem Flüssigkeitsbehälter mittels Mikrowellen im H11-Mode oder H01-Mode. Eine ebenfalls zur Flüssigkeitsmessung vorgesehene Messvorrichtung gemäß der US-Offenlegungsschrift US 2004-0099058 A1 basiert ebenfalls auf dem H01-Mode und dem H11-Mode.

Es hat sich in der Praxis als problematisch herausgestellt, dass beim Betrieb des Aktors an der Innenseite der Wandung Ablagerungen entstehen, beispielsweise durch Fett, Öl oder sonstige Schmiermittel, die die Ausbreitungseigenschaften der Mikrowellen beeinträchtigen. Das Öl, der Schmutz oder sonstige Ablagerungen verändern das elektrische Verhalten an der Innenwandung.

Es ist daher die Aufgabe der vorliegenden Erfindung, eine Positionsmessvorrichtung sowie ein Positionsmessverfahren bereitzustellen, bei denen die elektrischen Eigenschaften einer Innenwandung des Bewegungsraums bzw. des Ausbreitungsraums für die Mikrowellen keinen oder zumindest nur einen geringen Einfluß aus die Ausbreitung der Mikrowellen hat.

Zur Lösung der Aufgabe ist eine Mikrowellen-Positionsmessvorrichtung gemäß der technischen Lehre des Anspruchs 1 vorgesehen. Ferner ist zur Lösung der Aufgabe ein Positionsmessverfahren gemäß einem weiteren unabhängigen Anspruch vorgesehen.

Der Erfindung liegt die Erkenntnis zu Grunde, dass Fett oder andere Ablagerungen im Bereich der Innenwandung zwar auf das elektrische Feld Auswirkungen haben, wie andere thermoplastische Kunststoffe oder sonstige Dielektrika auch. Der Einfluss auf magnetische Felder ist allerdings gering. Auch andere Ablagerungen an der Innenwand des Hohlleiters bzw. des Bewegungsraums für das Aktorglied, beispielsweise Kondenswasser oder dergleichen, beeinflussen die Ausbreitung der Mikrowellen und somit die Messgenauigkeit der neuartigen Positionsmessvorrichtung nicht oder zumindest nur unwesentlich.

Die elektrischen Feldlinien bilden sich z.B. bei sogenannten H- oder TE-Wellen im Wesentlichen quer zur Ausbreitungsrichtung der Mikrowellen aus. Das elektrische Feld, insbesondere das tangentiale elektrische Feld, ist am Hohlleiterinnenumfang bzw. an der Innenwandung des Hohlleiters verschwindend gering oder zweckmäßigerweise sogar Null. Vorteilhaft ist auch eine zum Hohlleiterinnenumfang bzw. zur Innenwandung des Hohlleiters senkrechte elektrische Feldkomponente verschwindend gering oder zweckmäßigerweise sogar Null. An dem Innenumfang oder der Innenwandung anhaftende Dielektrika, beispielsweise Schmiermittel, Fett, Verschmutzungen oder dergleichen, beeinflussen das elektrische Feld, das vorteilhaft insgesamt zumindest im Wesentlichen Null ist, daher nicht.

Der Aktor ist vorzugsweise ein Linearaktor. Besonders bevorzugt ist die Anwendung der Erfindung im Bereich der Fluidtechnik, insbesondere der Pneumatik. Es versteht sich, dass auch elektrische oder kombinierte elektrisch-fluidtechnische Aktoren, sogenannte Hybridantriebe, mit der erfindungsgemäßen Positionsmessvorrichtung ausgestattet sein können.

Eine besonders bevorzugte Ausführungsform der Erfindung sieht vor, dass der Bewegungsraum bzw. der Hohlleiter kreiszylindrisch sind, d.h. einen im Wesentlichen kreisförmigen Querschnitt aufweisen. Die Mikrowellen-Antennenanordnung ist bei einem kreiszylindrischen Querschnitt derart ausgestaltet, dass sie die Mikrowellen mit kleineren Wellenlängen als eine kritische Wellenlänge sendet und empfängt, die etwa dem 0,82-fachen eines Durchmessers des kreisförmigen Innenumfangs entspricht.

Zweckmäßigerweise werden die Mikrowellen in einem H0n-Mode gesendet. Besonders bevorzugt ist der H01-Mode. Der H0n-Mode wird auch als TE0n-Mode bezeichnet, der H01-Mode als TE01-Mode.

Es versteht sich, dass auch Hohlleiter mit nicht kreiszylindrischem Querschnitt, beispielsweise elliptischen, im Wesentlichen polygonen Querschnitten, auch der Kreisform angenäherten polygonen Querschnitten oder dergleichen, auf erfindungsgemäße Weise mit Mikrowellen beschickt werden können, deren elektrisches Feld im Bereich der Innenwandung des jeweiligen Hohlleiters Null oder zumindest im Wesentlichen Null ist. Zwar ist es denkbar, dass das elektrische Feld bei einem nicht kreiszylindrischen oder nicht ideal kreiszylindrischen Querschnitt des Hohlleiters nicht überall am Innenumfang nicht ganz Null ist. Erfindungsgemäß wird aber ein solcher sogenannter existenzfähiger Mode der Mikrowellen gewählt, bei dem die elektrische Feldstärke an der Innenwand des Hohlleiters möglichst klein ist und bei dem das elektrische Feld im Innern des Hohlleiters konzentriert ist.

Eine zweckmäßige Mikrowellen-Antennenanordnung weist eine Koppelsonde auf, die einen planaren Träger mit elektrisch leitenden Polflächen hat. Polendbereiche der Polflächen sind entlang mindestens einer elektrischen Feldlinie der zu sendenden bzw. der zum empfangenden Mikrowellen angeordnet. Bei einer kreisförmigen Feldlinie, die für einen kreisförmigen Innenquerschnitt benötigt wird, sind die Polendbereiche beispielsweise entlang eines Kreises positioniert. Die Koppelsonde hat beispielsweise eine Microstrip-Bauart.

Die Polflächen bilden vorzugsweise mindestens acht, zweckmäßigerweise mindestens zwölf Dipole. Die Dipole sind bei der kreisförmigen Anordnung beispielsweise kurvenförmig und an dem Träger ringförmig angeordnet. Die Polflächen enthalten zweckmäßigerweise von einer Mitte zu einem Rand des Trägers strahlförmig verlaufende Leiterabschnitte. Zu dieser Mitte führt zweckmäßigerweise ein Koaxialleiter, der die Polflächen unterschiedlicher Polarität dann jeweils kontaktiert.

Ein Leiterabschnitt einer Polfläche, der radial nach außen führt, sowie mindestens ein Polendbereich der Polfläche, der entsprechend mindestens einer Feldlinie verläuft, sind vorzugsweise zueinander winkelig. Der Polendbereich ist beispielsweise kreisförmig, kurvenförmig oder dergleichen. Es versteht sich, dass bei nicht-kreisförmigen Feldlinien, z.B. bei im Wesentlichen quadratischen Querschnitten, die Feldlinien mit den entsprechenden Querschnitten korrespondieren und dementsprechend die Polendbereiche orientiert sind.

Zweckmäßigerweise hat der Träger eine mit dem Innenquerschnitt des Hohlleiters korrespondierende Außenkontur, z.B. eine kreisförmige, eine im Wesentlichen polygone Außenkontur oder dergleichen. Bei einer polygonen Kontur sind Eckbereiche zweckmäßigerweise gerundet.

An der Koppelsonde sind zweckmäßigerweise Polflächen einer ersten Polarität an einer dem Bewegungsraum zugewandten Vorderseite des Trägers und Polflächen mit einer zweiten Polarität an einer von dem Bewegungsraum abgewandten Hinterseite des Trägers angeordnet. Der Träger isoliert die Polflächen unterschiedlicher Polaritäten.

Der Träger besteht zweckmäßigerweise aus einem scheibenförmigen Isolationsmaterial, z.B. Keramik, Kunststoff, einer Leiterplatte oder dergleichen.

Der oben erläuterte Koaxialleiter kontaktiert die Polflächen an der Vorderseite und an der Hinterseite und verbindet die Polflächen zweckmäßigerweise mit einer Hochfrequenzanordnung zum Erzeugen und/oder Auswerten der Mikrowellen.

Die Polflächen, insbesondere die hinteren Polflächen, sind in einem Abstand zu einer hinteren elektrisch leitenden Stirnseite des Hohlleiters angeordnet, der etwa einem viertel der Wellenlänge der Mikrowellen entspricht.

Nachfolgend wird ein Ausführungsbeispiel anhand der Zeichnung näher erläutert. Es zeigen:
- Figur 1: eine geschnittene und teilweise schematische An- sicht eines Aktors, der mit einer erfindungsgemäßen Positionsmessvorrichtung ausgestattet ist,
- Figur 2: eine Querschnittsansicht des Aktors gemäß Figur 1 geschnitten entlang einer Linie A-A in Figur 1,
- Figur 3a: eine Koppelsonde der Positionsmessvorrichtung gemäß Figur 1 von vorn, wobei in gestrichelten Linien Polflächen auf der Hinterseite der Koppelsonde an- gedeutet sind, und
- Figur 3b: die Koppelsonde gemäß Figur 3a, jedoch ohne die Polflächen auf der Hinterseite.

Ein pneumatischer Arbeitszylinder 10 bildet einen Aktor 11, insbesondere einen fluidtechnischen Linearaktor. In einem Bewegungsraum 12 eines Aktor-Gehäuses 13 ist ein Aktorglied 14 linear hin- und her beweglich angeordnet. Das Aktorglied 14 ist durch einen Kolben 15 des Arbeitszylinders 10 gebildet. Beim Ausführungsbeispiel handelt es sich um einen pneumatischen Arbeitszylinder mit einer Kolbenstange 25, wobei auch kolbenstangenlose Varianten, elektrische Antriebe, kombinierte elektro-pneumatische Antriebe, insbesondere Linearantriebe, ohne weiteres möglich sind.

Eine Ventilanordnung 16, die beispielsweise ein 2/2-Ventil aufweist, speist Druckluft 17 aus einer Druckluftquelle 18 über Druckluftanschlüsse 19, 20 in den Bewegungsraum 12 ein bzw. ermöglicht das Ausströmen von Druckluft aus den Druckluftanschlüssen 19, 20, um den Kolben 15 anzutreiben, der den Bewegungsraum 12 in zwei nicht näher bezeichnete Teilkammern trennt. Am Außenumfang des Kolbens 15 ist beispielsweise hierfür eine Dichtung 21 vorgesehen.

Ein Mittelteil 22 des Gehäuses 13 mit einem kreisförmigen Querschnitt 37 wird stirnseitig durch einen Lagerdeckel 23 sowie einen Abschlussdeckel 24 verschlossen, und begrenzt somit die Kolbenkammer bzw. den Bewegungsraum 12. Der Lagerdeckel 23 wird von der Kolbenstange 25 durchdrungen, die ein Kraftabgriffselement des Arbeitszylinders 10 bildet.

Eine Positionsmessvorrichtung 30 dient zu einer Positionserfassung des Aktorglieds 14 innerhalb des Bewegungsraums 12, beispielsweise eines Abstandes 31 des Kolbens 15 von einer hinteren Stirnwandung 32. Eine nicht dargestellte Schutzeinrichtung, beispielsweise einem Kunststoffelement, kann eine Mikrowellen-Antennenanordnung 34 der Positionsmessvorrichtung 30 vor mechanischen Einflüssen, beispielsweise Druckstößen, Aufprall des Kolbens 15 oder dergleichen, schützen.

Die Mikrowellen-Antennenanordnung 34 enthält eine Koppelsonde 35 zum Senden und Empfangen von Mikrowellen mit hoher Frequenz, beispielsweise in einem Frequenzbereich von etwa 1 GHz bis 50 GHz.

Mit Hilfe einer Hochfrequenzeinrichtung 41 können Mikrowellen 43 erzeugt werden, die die Koppelsonde 35 in den Bewegungsraum 12 einkoppelt.

Das Aktor-Gehäuse 13 ist zumindest innenseitig elektrisch leitend.

Der Bewegungsraum 12 bildet einen Hohlleiter 36, der die Mikrowellen 43 bis zum Aktorglied 14 leitet, das die Mikrowellen 43 reflektiert und Reflexionsmikrowellen 44 bildet.

Die Positionsmessvorrichtung 30 sendet die Mikrowellen 43 in einem Mode, bei dem ein elektrisches Feld 50 einen kreisförmigen Verlauf mit Bezug auf den kreisförmigen Querschnitt 37 des Hohlleiters 36 aufweist. Das elektrische Feld 50 der Mikrowellen 43, 44 ist an einem ebenfalls kreisförmigen Innenumfang 38 des Hohlleiters 36 zumindest im Wesentlichen Null. Jedenfalls ist das tangentiale elektrische Feld am Hohlleiter-Innenumfang 38 sehr gering oder vorteilhafterweise Null.

Die Mikrowellen-Antennenanordnung 34 sendet die Mikrowellen 43 in einem H01-Mode, der auch als TE01-Mode bezeichnet werden kann. Die Mikrowellen haben beispielsweise eine Frequenz, die größer ist als eine Grenzfrequenz mit einer kritischen Wellenlänge, die dem 0,82-fachen eines Durchmessers D des Innenumfangs 38 entspricht. Eine Besselfunktion, die den Mikrowellen 43, 44 zugeordnet ist, hat dann im Bereich des Innenumfangs 38 eine Nullstelle sowie etwa im Bereich einer Mittelachse 54 des Hohlleiters 36.

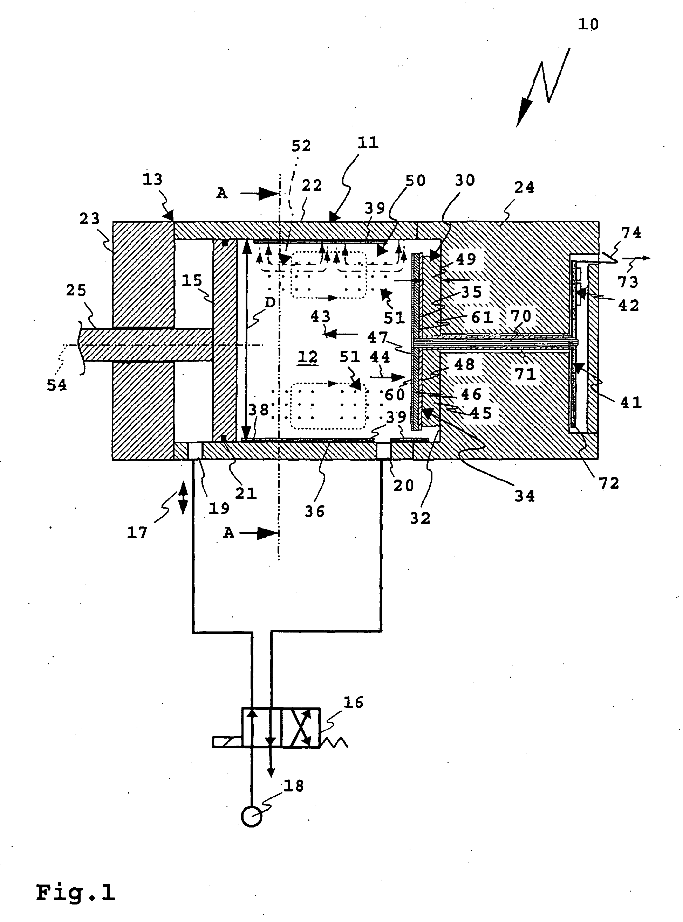

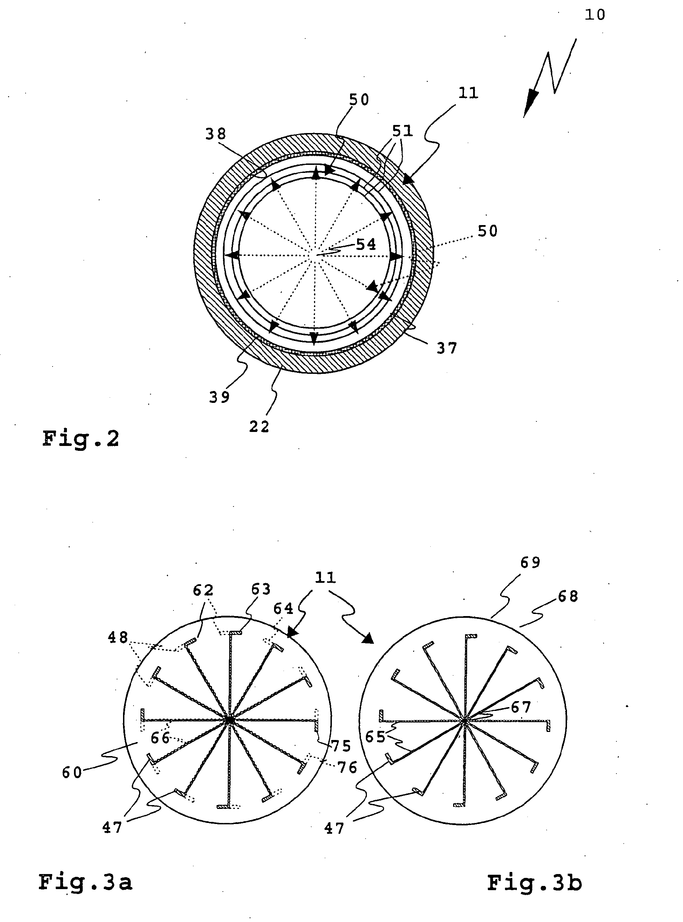

Die elektrischen Feldlinien 51 schneiden die Darstellungsebene in Figur 1 senkrecht und sind daher punktförmig dargestellt. In Figur 2 sieht man den kreisförmigen Verlauf der Feldlinien 51.

Ablagerungen 39, z.B. Fett, Kondenswasser oder dergleichen, am Innenumfang 38 des Hohlleiters 36 haben einen geringen Einfluß auf das elektrische Feld 50, da das Feld 50 im Bereich des Innenumfanges 38 im Wesentlichen gleich Null ist.

Aus Gründen der Veranschaulichung ist zusätzlich ein elektrisches Feld 52 von Mikrowellen in einem E01-Mode eingezeichnet. Die Feldlinien des Feldes 52 verlaufen im Wesentlichen senkrecht zur Innenwand bzw. zum Innenumfang 38 beim Übertritt in die elektrisch leitende Innenwand 40 des Hohlleiters 36. Man erkennt in der Zeichnung dass die Ablagerungen 39 das Feld 52 beeinflussen. Aus Gründen der Veranschaulichung ist das elektrische Feld 52 nur an einer Seite des Innenumfangs 38 mit strichpunktierten Linien dargestellt.

Ein magnetisches Feld 53 der Mikrowellen 43, 44 ist beispielhaft in gestrichelten Linien in den Figuren 1 und 2 dargestellt. Das magnetische Feld 53 verläuft von der Mittelachse 54 ausgehend strahlförmig nach radial außen.

Die Frequenz der Mikrowellen 43, 44 beträgt beispielsweise etwa 20 bis 30 GHz, wobei je nach Durchmesser des Gehäuses13 auch kleinere oder größere Frequenzen denkbar sind. Es versteht sich, dass auch höhere H0n-Moden denkbar sind, beispielsweise H02 oder H03, die entsprechend höhere Betriebsfrequenzen verlangen.

Die Koppelsonde 35 ist im Bereich des Abschlussdeckels 24 angeordnet. Beispielsweise ist die Koppelsonde 35 freistehend oder, wie beim Ausführungsbeispiel an einem Halter 45 gehaltert.

Die Koppelsonde 35 und der Bewegungsraum 12 sowie der Hohlleiter 36 sind konzentrisch.

Die Koppelsonde 35 weist einen planaren Träger 46 aus einem isolierenden Trägermaterial, beispielsweise Keramik, Kunststoff oder dergleichen auf, an dem elektrisch leitende Polflächen 47, 48 zum Senden und Empfangen der Mikrowellen 43, 44 angeordnet sind.

Der Träger 46 hat eine mit dem Innen-Querschnitt 37 des Hohlleiters 36 korrelierende Außenkontur 69.

Die Polflächen 47 sind an einer dem Aktorglied 14 bzw. der Bewegungsraum 12 zugewandten Vorderseite 60 und die Polflächen 48 an einer von dem Bewegungsraum 12 abgewandten Hinterseite 61 des Trägers 46 angeordnet. Die Polflächen 47, 48 weisen unterschiedliche Polaritäten auf und bilden Dipole 62.

Die Dipole 62 haben einen kurvenförmigen Verlauf und werden im Ausführungsbeispiel durch Polendbereiche 63, 64 der Polflächen 47, 48 gebildet. Die Polendbereiche 63, 64 können gerade Abschnitte sein, die rechtwinklig zu Leiterabschnitten 65, 66 der Polflächen 47, 48 sind. Die Leiterabschnitte 65, 66 verlaufen strahlförmig von einer Mitte 67 zum Rand 68 des Trägers 46.

Die Polflächen 47, 48 bestehen aus elektrisch leitfähigem Material, z.B. Metall, das auf den Träger 46 aufgedampft ist. Ferner ist es möglich, die Polflächen 47, 48 in einem Ätzverfahren herzustellen.

Beim Ausführungsbeispiel sind die Polendbereiche 63, 64 geradlinig. Es ist auch denkbar, die Polendbereiche entsprechend dem kreisförmigen Verlauf der Feldlinien 51 zu krümmen.

Die Polendbereiche 63, 64 sind gewinkelte Leiterabschnitte, die einander zugewandt sind. Jeweils zwei unterschiedlich polarisierte Polenden 75, 76 der Polendbereiche 63, 64 sind einander zugewandt.

Der Halter 45 hält den Träger 46 mit den Polflächen 47, 48 in einem Abstand 49 zu der hinteren, elektrisch leitenden Stirnwandung 32 des Hohlleiters 36. Die Stirnwandung 32 wird durch eine dem Bewegungsraum 12 zugewandte Vorderseite des Abschlussdeckels 24 gebildet. Der Abstand 49 entspricht etwa einer viertel Wellenlänge der Mikrowellen 43, 44. Von der Koppelsonde 35 nach hinten zur Stirnwandung 32 abgestrahlte Mikrowellen 43 durchlaufen somit eine Phase von 2n, nämlich jeweils π/2 von der Koppelsonde 35 zur Stirnwandung 32 und zurück sowie eine Phasendrehung um π an den elektrisch leitenden hinteren Stirnwandung 32. Somit löschen sich Mikrowellen nicht aus, die von der Koppelsonde 35 zur Stirnwandung 32 hinlaufen und von dort wieder zurück reflektiert werden.

Zur Anpassung des Eingangswiderstandes der Koppelsonde 35 an eine Impedanz des Senders und/oder des Empfängers ist es möglich, den Abstand 49 etwas größer oder kleiner als eine viertel Wellenlänge der Mikrowellen 43, 44 auszuwählen.

Von der Mitte 67 der Koppelsonde 35 führt ein Koaxialleiter 70 durch einen Kanal 71 des Abschlussdeckel 24 hindurch zur Hinterseite des Abschlussdeckels 24, wo die Hochfrequenzeinrichtung 41 und eine Auswerteeinrichtung 42 angeordnet sind. Der Koaxialleiter 70 verbindet die Hochfrequenzeinrichtung 41 mit den Polflächen 47, 48.

Die Hochfrequenzeinrichtung 41 enthält Mittel zum Erzeugen bzw. zum Auswerten der Mikrowellen 43, 44, beispielsweise ein Anpassungsnetzwerk, Einkoppelungselemente und Auskoppelungselemente, z.B. Kondensatoren, Millimeterwellen Integrated Circuits, spannungsgesteuerte Oszillatoren, Mischer und dergleichen.

Die mit der Hochfrequenzeinrichtung 41 elektrisch gekoppelte Auswerteeinrichtung 42, die beispielsweise zusammen mit der Hochfrequenzeinrichtung 41 auf einem Träger 72 an der Hinterseite des Abschlussdeckels 24 angeordnet ist, bildet beispielsweise anhand einer Phasendifferenz der Mikrowellen 43, 44 ein Positionssignal 73, das die Position des Aktorglieds 14 in dem Bewegungsraum 12 repräsentiert. Die Auswerteeinrichtung 42 bildet Auswertemittel. Sie enthält beispielsweise einen Prozessor, Speicher, integrierte Schaltkreise und dergleichen. Die Auswerteeinrichtung 42 überträgt das Positionssignal 73 beispielsweise drahtgebunden oder drahtlos, z.B. über eine Antenne 74.

## Patentansprüche

1. Mikrowellen-Positionsmessvorrichtung zur Positionserfassung eines in einem Bewegungsraum (12) eines Aktor-Gehäuses (13) beweglich angeordneten Aktorglieds (14) eines Aktors (11), wobei der Bewegungsraum (12) zumindest abschnittsweise einen Hohlleiter (36) bildet, mit einer Hochfrequenz-Mikrowellen-Antennenanordnung (34) zum Senden von Mikrowellen (43) in den Hohlleiter (36) und zum Empfangen von durch zumindest teilweise Reflexion der gesendeten Mikrowellen (43) an dem Aktorglied (14) gebildeten Reflexions-Mikrowellen (44) aus dem Hohlleiter (36), und mit Auswertemitteln (42) zur Bildung eines die jeweilige Position des Aktorglieds (14) repräsentierenden Positionssignals (73) anhand der Reflexions-Mikrowellen (44), **dadurch gekennzeichnet, dass** die Mikrowellen-Antennenanordnung (34) zum Senden und Empfangen der Mikrowellen (43, 44) in einem Mode ausgestaltet ist, bei dem das elektrische Feld (50) der Mikrowellen (43, 44) an einem Querschnitts-Innenumfang (38) des Hohlleiters (36) zumindest im wesentlichen Null ist.

2. Mikrowellen-Positionsmessvorrichtung nach Anspruch 1, **dadurch gekennzeichnet, dass** die Mikrowellen-Antennenanordnung (34) zum Senden und Empfangen der Mikrowellen (43, 44) in einem H0n-Mode, insbesondere in dem H01-Mode, ausgestaltet ist.

3. Mikrowellen-Positionsmessvorrichtung nach Anspruch 1 oder 2, **dadurch gekennzeichnet, dass** der Hohlleiter (36) einen im wesentlichen kreisförmigen Innen-Querschnitt (37) aufweist.

4. Mikrowellen-Positionsmessvorrichtung nach Anspruch 3, **dadurch gekennzeichnet, dass** die Mikrowellen-Antennenanordnung (34) zum Senden und Empfangen der Mikrowellen mit kleineren Wellenlängen als einer kritische Wellenlänge von etwa dem 0,82-fachen eines Durchmessers (D) des kreisförmigen Innenumfangs (38) ausgestaltet ist.

5. Mikrowellen-Positionsmessvorrichtung nach einem der vorhergehenden Ansprüche, **dadurch gekennzeichnet, dass** die Mikrowellen-Antennenanordnung (34) eine Koppelsonde (35) mit an einem planaren Träger (46) angeordneten Polflächen (47, 48) mit abwechselnder Polarität aufweist, und dass Polendbereiche (63, 64) der Polflächen (47, 48) entlang mindestens einer elektrischen Feldlinie (51) der zu sendenden und/oder zu empfangenden Mikrowellen (43, 44), insbesondere kreisförmig, angeordnet sind.

6. Mikrowellen-Positionsmessvorrichtung nach Anspruch 5, **dadurch gekennzeichnet, dass** die Polflächen (47, 48) Dipole (62) bilden.

7. Mikrowellen-Positionsmessvorrichtung nach Anspruch 5 oder 6, **dadurch gekennzeichnet, dass** die Dipole (62) kurvenförmig sind und an dem Träger (46) ringförmig angeordnet sind.

8. Mikrowellen-Positionsmessvorrichtung nach einem der Ansprüche 5 bis 7, **dadurch gekennzeichnet, dass** die Polflächen (47, 48) von einer Mitte (67) zu einem Rand (68) des Trägers (46) strahlförmig verlaufende Leiterabschnitte (65, 66) aufweisen.

9. Mikrowellen-Positionsmessvorrichtung nach Anspruch 8, **dadurch gekennzeichnet, dass** ein Leiterabschnitt (65, 66) einer Polfläche (47, 48) und ein entsprechend mindestens einer Feldlinie (51) verlaufenden Abschnitt des Polendbereichs (63, 64) der Polfläche (47, 48) zueinander winkelig sind.

10. Mikrowellen-Positionsmessvorrichtung nach einem der Ansprüche 5 bis 9, **dadurch gekennzeichnet, dass** der Träger (46) aus einem scheibenförmigen Isolationsmaterial ist.

11. Mikrowellen-Positionsmessvorrichtung nach einem der Ansprüche 5 bis 10, **dadurch gekennzeichnet, dass** der Träger (46) eine mit einem Innenquerschnitt (37) des Hohlleiters (36) korrelierende Außenkontur (69) aufweist.

12. Mikrowellen-Positionsmessvorrichtung nach einem der Ansprüche 5 bis 11, **dadurch gekennzeichnet, dass** Polflächen (47) einer ersten Polarität an einer dem Bewegungsraum (12) zugewandten Vorderseite (60) des Trägers (46) und Polflächen (48) einer zweiten Polarität an einer von dem Bewegungsraum (12) abgewandten Hinterseite (61) des Trägers (46) angeordnet sind.

13. Mikrowellen-Positionsmessvorrichtung nach einem der Ansprüche 5 bis 12, **dadurch gekennzeichnet, dass** die Polflächen (47, 48) über einen Koaxialleiter (70) mit einer Hochfrequenzeinrichtung (41) zum Erzeugen und Auswerten der Mikrowellen (43, 44) verbunden sind.

14. Mikrowellen-Positionsmessvorrichtung nach einem der Ansprüche 5 bis 13, **dadurch gekennzeichnet, dass** die Polflächen (47, 48) zu einer hinteren elektrisch leitenden Stirnseite (32) des Hohlleiters (36) in einem Abstand (49) von etwa einem Viertel der Wellenlänge der Mikrowellen (43, 44) angeordnet sind.

15. Mikrowellen-Positionsmessvorrichtung nach einem der vorhergehenden Ansprüche, **dadurch gekennzeichnet, dass** alle Richtungskomponenten des elektrischen Felds (50) der Mikrowellen (43, 44) an dem Querschnitts-Innenumfang (38) des Hohlleiters (36) zumindest im wesentlichen Null sind.

16. Aktor mit einer Positionsmessvorrichtung (30) nach einem der vorhergehenden Ansprüche.

17. Aktor nach Anspruch 15, **dadurch gekennzeichnet, dass** er ein Linearaktor ist.

18. Aktor nach Anspruch 16 oder 17, **dadurch gekennzeichnet, dass** er ein elektrischer und/oder fluidtechnischer, insbesondere pneumatischer Aktor ist.

19. Positionsmessverfahren zur Positionserfassung eines in einem Bewegungsraum (12) eines Aktor-Gehäuses (13) beweglich angeordneten Aktorglieds (14) eines Aktors (11), wobei der Bewegungsraum (12) zumindest abschnittsweise einen Hohlleiter (36) bildet, mit den Schritten:
- Senden von Mikrowellen in den Hohlleiter (36) und Empfangen von durch zumindest teilweise Reflexion der gesendeten Mikrowellen an dem Aktorglied (14) gebildeten Reflexions-Mikrowellen (43, 44) aus dem Hohlleiter (36) mit einer Hochfrequenz-Mikrowellen-Antennenanordnung (34), und
- Bildung eines die jeweilige Position des Aktorglieds (14) repräsentierenden Positionssignals (73) anhand der Reflexions-Mikrowellen (44), **gekennzeichnet durch**,
- Senden und Empfangen der Mikrowellen (43, 44) in einem Mode, bei dem das elektrische Feld (50) der Mikrowellen an einem Querschnitts-Innenumfang (38) des Hohlleiters (36) zumindest im wesentlichen Null ist.

## Claims

1. Microwave position measuring device for detecting the position of an actuator element (14) of an actuator (11) mounted movably in a movement space (12) of an actuator housing (13), wherein the movement space (12) forms at least in part a waveguide (36), with a high-frequency microwave aerial assembly (34) for the sending of microwaves (43) into the waveguide (36) and for receiving from the waveguide (36) reflection microwaves (44) formed by at least partial reflection of the transmitted microwaves (43) at the actuator element (14), and with analysing means (42) for forming with the aid of the reflection microwaves (44) a position signal (73) representing the respective position of the actuator element (14), **characterised in that** the microwave aerial assembly (34) for sending and receiving the microwaves (43, 44) is designed in a mode in which the electrical field (50) of the microwaves (43, 44) is at least substantially zero at a cross-section inside periphery (38) of the waveguide (36).

2. Microwave position measuring device according to claim 1, **characterised in that** the microwave aerial assembly (34) for the sending and receiving of microwaves (43, 44) is designed in an H0n mode, in particular in the H01 mode.

3. Microwave position measuring device according to claim 1 or 2, **characterised in that** the waveguide (36) has a substantially circular internal cross-section (37).

4. Microwave position measuring device according to claim 3, **characterised in that** the microwave aerial assembly (34) for the sending and receiving of the microwaves is designed with smaller wavelengths than a critical wavelength of around 0.82 times a diameter (D) of the circular inside periphery (38).

5. Microwave position measuring device according to any of the preceding claims, **characterised in that** the microwave aerial assembly (34) has a coupling probe (35) with pole faces (47, 48) of alternating polarity arranged on a planar support (46), and that pole end sections (63, 64) of the pole faces (47, 48) are arranged along at least one electrical field line (51) of the microwaves (43, 44) to be sent and/or received, in particular circular.

6. Microwave position measuring device according to claim 5, **characterised in that** the pole faces (47, 48) form dipoles (62).

7. Microwave position measuring device according to claim 5 or 6, **characterised in that** the dipoles (62) are curved and are arranged in rings on the support (46).

8. Microwave position measuring device according to any of claims 5 to 7, **characterised in that** the pole faces (47, 48) have ray-like conductor sections (65, 66) running from a centre (67) to an edge (68) of the support (46).

9. Microwave position measuring device according to claim 8, **characterised in that** one conductor section (65, 66) of one pole face (47, 48) and a section of the pole end section (63, 64) of the pole face (47, 48) corresponding to at least one field line (51) are at an angle to one another.

10. Microwave position measuring device according to any of claims 5 to 9, **characterised in that** the support (46) is made of a disc-shaped insulating material.

11. Microwave position measuring device according to any of claims 5 to 10, **characterised in that** the support (46) has an external contour (69) correlating with an internal cross-section (37) of the waveguide (36).

12. Microwave position measuring device according to any of claims 5 to 11, **characterised in that** pole faces (47) of a first polarity are arranged on a front side (60) of the support (46) facing the movement space (12), and pole faces (48) of a second polarity are arranged on a rear side (61) of the support (46) facing away from the movement space (12).

13. Microwave position measuring device according to any of claims 5 to 12, **characterised in that** the pole faces (47, 48) are connected via a coaxial conductor (70) to a high-frequency device (41) for generating and analysing the microwaves (43, 44).

14. Microwave position measuring device according to any of claims 5 to 13, **characterised in that** the pole faces (47, 48) are located at a rear electrically conductive end face (32) of the waveguide (36) at a distance (49) of around one quarter of the wavelength of the microwaves (43, 44).

15. Microwave position measuring device according to any of the preceding claims, **characterised in that** all directional components of the electrical field (50) of the microwaves (43, 44) are at least substantially zero at the cross-section inside periphery (38) of the waveguide (36).

16. Actuator with a position measuring device (30) according to any of the preceding claims.

17. Actuator according to claim 15, **characterised in that** it is a linear actuator.

18. Actuator according to claim 16 or 17, **characterised in that** it is an electrical and/or fluidic, in particular pneumatic actuator.

19. Position measuring method for detecting the position of an actuator element (14) of an actuator (11) mounted movably in a movement space (12) of an actuator housing (13), wherein the movement space (12) forms at least in part a waveguide (36), with the steps:
- sending of microwaves into the waveguide (36) and for receiving from the waveguide (36) reflection microwaves (43, 44) formed by at least partial reflection of the transmitted microwaves (43), using a high-frequency microwave aerial assembly (34), and
- forming with the aid of the reflection microwaves (44) a position signal (73) representing the respective position of the actuator element (14), **characterised by**
- sending and receiving the microwaves (43, 44) in a mode in which the electrical field (50) of the microwaves is at least substantially zero at a cross-section inside periphery (38) of the waveguide (36).

## Revendications

1. Dispositif de mesure de position à micro-ondes servant à détecter la position d'un élément activateur (14) disposé de manière mobile dans un espace de mouvement (12) d'un boîtier d'activateur (13) d'un activateur (11), l'espace de mouvement (12) constituant au moins en partie un conducteur creux (36), avec une installation d'antenne à micro-ondes à haute fréquence (34) servant à émettre des micro-ondes (43) dans le conducteur creux (36) et à recevoir des micro-ondes de réflexion (44) sortant du conducteur creux (36) constituées par réflexion au moins partielle des micro-ondes (43) émises au niveau de l'élément activateur (14), et avec des moyens d'exploitation (42) servant à réaliser un signal de position (73) représentant la position respective de l'élément activateur (14) au moyen des micro-ondes de réflexion (44), **caractérisé en ce que** l'installation d'antenne à micro-ondes (34) servant à émettre et à recevoir des micro-ondes (43, 44) est réalisée dans un mode dans le cadre duquel le champ électrique (50) des micro-ondes (43, 44) est sensiblement nul au niveau d'une périphérie interne de la section transversale (38) du conducteur creux (36).

2. Dispositif de mesure de position à micro-ondes selon la revendication 1, **caractérisé en ce que** l'installation d'antenne à micro-ondes (34) servant à émettre et à recevoir des micro-ondes (43, 44) est réalisée dans un mode HOn, en particulier dans le mode H01.

3. Dispositif de mesure de position à micro-ondes selon la revendication 1 ou la revendication 2, **caractérisé en ce que** le conducteur creux (36) présente une section interne (37) essentiellement circulaire.

4. Dispositif de mesure de position à micro-ondes selon la revendication 3, **caractérisé en ce que** l'installation d'antenne à micro-ondes (34) servant à émettre et à recevoir des micro-ondes est réalisée avec des longueurs d'ondes inférieures à une longueur d'onde critique multiple d'environ 0,82 fois un diamètre (D) de la périphérie interne circulaire (38).

5. Dispositif de mesure de position à micro-ondes selon l'une quelconque des revendications précédentes, **caractérisé en ce que** l'installation d'antenne à micro-ondes (34) présente une sonde de couplage (35) avec des faces polaires (47, 48) à polarité alternée disposées sur un support planaire (46), et **en ce que** des zones d'extrémité de pôle (63, 64) des faces polaires (47, 48) sont disposées le long d'au moins une ligne de champ électrique (51) des micro-ondes (43, 44) à émettre et/ou à réceptionner, en particulier de manière circulaire.

6. Dispositif de mesure de position à micro-ondes selon la revendication 5, **caractérisé en ce que** lés faces polaires (47, 48) forment des dipôles (62).

7. Dispositif de mesure- de position à micro-ondes selon les revendications 5 ou 6, **caractérisé en ce que** les dipôles (62) ont une forme courbe et sont disposés de manière à former un anneau sur le support (46).

8. Dispositif de mesure de position à micro-ondes selon l'une quelconque des revendications 5 à 7, **caractérisé en ce que** les faces polaires (47, 48) présentent des segments conducteurs (65, 66) s'étendant en forme de rayons à partir d'un milieu (67) jusqu'a un bord (68) du support (46).

9. Dispositif de mesure de position à micro-ondes selon la revendication 8, **caractérisé en ce qu'**un segment conducteur (65, 66) d'une face polaire (47, 48) et un segment de la zone d'extrémité polaire (63, 64) de la face polaire (47, 48) s'étendant de manière correspondante à au moins une ligne de champ (51) sont angulaires l'un par rapport à l'autre.

10. Dispositif de mesure de position à micro-ondes selon l'une quelconque des revendications 5 à 9, **caractérisé en ce que** le support (46) est fabriqué à partir d'un matériau isolant en forme de disque.

11. Dispositif de mesure de position à micro-ondes selon l'une quelconque des revendications 5 à 10, **caractérisé en ce que** le support (46) présente un contour extérieur (69) en corrélation avec une section transversale interne (37) du conducteur creux (36).

12. Dispositif de mesure de position à micro-ondes selon l'une quelconque des revendications 5 à 11, **caractérisé en ce que** des faces polaires (47) d'une première polarité sont disposées sur un côté avant (60) du support (46), orienté vers l'espace de mouvement (12), et **en ce que** des faces polaires (48) d'une deuxième polarité sont disposées sur un côté arrière (61) du support (46) opposé à l'espace de mouvement (12).

13. Dispositif de mesure de position à micro-ondes selon l'une quelconque des revendications 5 à 12, **caractérisé en ce que** les faces polaires (47, 48) sont reliées par l'intermédiaire d'un conducteur coaxial (70) à un dispositif haute fréquence (41) servant à générer et à évaluer des micro-ondes (43, 44).

14. Dispositif de mesure de position à micro-ondes selon l'une quelconque des revendications 5 à 13, **caractérisé en ce que** les faces polaires (47, 48) sont disposées par rapport à un côté frontal (32) électroconducteur arrière du conducteur creux (36) à une distance (49) d'environ un quart de la longueur d'onde des micro-ondes (43, 44).

15. Dispositif de mesure de position à micro-ondes selon l'une quelconque des revendications précédentes, **caractérisées en ce que** toutes les composantes directionnelles du champ électrique (50) des micro-ondes (43, 44) sont au moins essentiellement nulles au niveau de la périphérie interne de la section transversale (38) du conducteur creux (36).

16. Activateur avec un dispositif de mesure de position (30) selon l'une quelconque des revendications précédentes.

17. Activateur selon la revendication 15, **caractérisé en ce qu'**il est un activateur linéaire.

18. Activateur selon la revendication 16 ou 17, **caractérisé en ce qu'**il est un activateur électrique et/ou à technique des fluides, en particulier pneumatique.

19. Procédé de mesure de position servant à détecter la position d'un élément activateur (14) d'un activateur (11), disposé de manière mobile dans un espace de mouvement (12) d'un boîtier d'activateur (13), l'espace de mouvement (12) formant au moins par sections un conducteur creux (36), comportant les étapes suivantes :
- émission de micro-ondes dans le conducteur creux (36) et réception de micro-ondes de réflexion (44) sortant du conducteur creux (36) constituées par réflexion au moins partielle des micro-ondes (43) émises au niveau de l'élément activateur (14) avec une installation d'antenne à micro-ondes à haute fréquence (34), et
- formation d'un signal de position (73) représentant la position respective de l'élément activateur (14) au moyen des micro-ondes de réflexion (44), **caractérisé par**
- l'émission et la réception des micro-ondes (43, 44) dans un mode dans le cadre duquel le champ électrique (50) des micro-ondes est sensiblement nul au niveau d'une périphérie interne de la section transversale (38) du conducteur creux (36).
